**Europäisches Patentamt**

**European Patent Office**

**Office européen des brevets**

(19)

(11) Veröffentlichungsnummer : **0 370 167 B1**

(12) # EUROPÄISCHE PATENTSCHRIFT

(45) Veröffentlichungstag der Patentschrift :
16.10.91 Patentblatt 91/42

(51) Int. Cl.$^5$ : **B01J 2/16, B01J 8/36, B01J 8/44**

(21) Anmeldenummer : 89113057.7

(22) Anmeldetag : 17.07.89

(54) Fliessbettapparatur zum Herstellen und/oder Weiterbehandeln granulatförmigen Gutes.

(30) Priorität : 24.11.88 DE 3839723

(43) Veröffentlichungstag der Anmeldung :
30.05.90 Patentblatt 90/22

(45) Bekanntmachung des Hinweises auf die
Patenterteilung :
16.10.91 Patentblatt 91/42

(84) Benannte Vertragsstaaten :
AT BE CH DE ES FR GB IT LI LU NL SE

(56) Entgegenhaltungen :
EP-A- 0 125 516
DE-A- 2 551 578
GB-A- 1 187 567

(56) Entgegenhaltungen :
GB-A- 2 119 279
N.T.I.S. TECHNICAL NOTES, Nr. 7, Teil D, Juli
1986, Seite 808, Springfield, Virginia, US;
"Agglomeration-free distributor for fluidized
beds"

(73) Patentinhaber : Hüttlin, Herbert
Daimlerstrasse 7
W-7853 Steinen (DE)

(72) Erfinder : Hüttlin, Herbert
Daimlerstrasse 7
W-7853 Steinen (DE)

(74) Vertreter : Goetz, Rupert, Dipl.-Ing. et al
Wuesthoff & Wuesthoff Patent- und
Rechtsanwälte Schweigerstrasse 2
W-8000 München 90 (DE)

EP 0 370 167 B1

**Beschreibung**

Die Erfindung betrifft eine Fließbettapparatur zum Herstellen und/oder Weiterbehandeln granulatförmigen Gutes mit

— einem Behälter, der in bezug auf eine zumindest annähernd senkrechte Behälterachse zumindest annähernd rotationssymmetrisch ist, und dessen Innenraum sich zusammensetzt aus

— einer Eintrittskammer, die von einem Gas, insbes. trockener Luft, von unten nach oben durchströmbar ist, und

— einer Wirbelkammer, die über der Eintrittskammer angeordnet und zum Fluidisieren des Gutes ausgebildet ist, und mit

— einem Kranz Leitplatten, die dem aufwärtsgerichteten Gasstrom zwischen Eintrittskammer und Wirbelkammer einen Drall erteilen, sowie

— Düsen zum Einbringen von Granulierstoffen in die Wirbelkammer.

Bei einer bekannten Fließbettapparatur dieser Gattung (EP 0103894 B1) ist die Eintrittskammer von einer Schüssel gebildet, die einen unteren Endabschnitt eines senkrecht im Behälter angeordneten Tauchrohrs umschließt. An einem oberen, zylindrischen Innenwandabschnitt der Schüssel sind Leitplatten befestigt, die radial nach innen bis zum Tauchrohr vorspringen. In einem Abstand oberhalb der Leitplatten sind am Tauchrohr Düsen befestigt, die schräg nach oben gerichtet sind und mit Flüssigkeiten zum Befeuchten, Lackieren und/oder Dragieren eines im Behälter enthaltenen Gutes gespeist werden können.

Der Erfindung liegt die Aufgabe zugrunde, eine Apparatur der beschriebenen Gattung derart weiterzubilden, daß bei gegebener Größe der Apparatur und gegebenem Gasdurchsatz je Zeiteinheit größere Mengen pulverförmiger und/oder flüssiger Substanz je Zeiteinheit in den Behälter eingesprüht werden können, ohne daß das Gut in unkontrollierbarer Weise Klumpen bildet oder nennenswerte Mengen der Substanz sich im Behälter niederschlagen.

Die Aufgabe ist erfindungsgemäß mit einer Fließbettapparatur der beschriebenen Gattung gelöst, bei der

— die Leitplatten, in Richtung der Behälterachse betrachtet, einander überlappen, und

— zwischen den Leitplatten mindestens annähernd radial zur Behälterachse Lanzen angeordnet sind, die mindestens je eine in Strömungsrichtung des Gases angeordnete Düse aufweisen.

Durch die Überlappung der Leitplatten wird das zwischen ihnen hindurchströmende Gas in einzelne, im wesentlichen laminare Teilströmungen unterteilt, deren Strömungsrichtung durch die Anordnung der Leitplatten ausreichend genau festgelegt ist, um eine optimale Düsenrichtung zu definieren. In mindestens einigen dieser Teilströme des Gases ist je eine der erfindungsgemäßen Lanzen angeordnet, wodurch sich in diesen Teilströmen Venturi-Effekte ergeben. Dies bedeutet, daß an der Leeseite der Lanzen ein relativer Unterdruck entsteht, der die Düsen dabei unterstützt, pulverförmige und/oder flüssige Substanzen feinverteilt in die Wirbelkammer einzutragen. Das in der Wirbelkammer schon enthaltene oder aus den eingesprühten Substanzen erst entstehende, fluidisierte Gut wird durch den kräftigen Drall der Teilströmungen gründlich und doch schonend durchmischt. Infolgedessen ist das fertigbehandelte Gut besonders homogen. Die Behandlung kann, je nachdem wie die Fließbettapparatur im einzelnen ausgestaltet ist, chargenweise oder kontinuierlich stattfinden.

Vorteilhafte Weiterbildungen der Erfindung sind Gegenstand der Unteransprüche.

Im folgenden werden Ausführungsbeispiele der Erfindung anhand schematischer Zeichnungen mit weiteren Einzelheiten erläutert. Es zeigen :

Fig. 1    einen senkrechten Schnitt einer ersten erfindungsgemäßen Apparatur im Betrieb,
Fig. 2    den waagerechten Schnitt II-II in Fig. 1,
Fig. 3    einen senkrechten Schnitt einer zweiten erfindungsgemäßen Apparatur im Betrieb,
Fig. 4    den waagerechten Schnitt IV-IV in Fig. 3,
Fig. 5    einen senkrechten Teilschnitt entsprechend Fig. 3, jedoch in Ruhestellung der Apparatur,
Fig. 6    einen senkrechten Schnitt einer dritten erfindungsgemäßen Apparatur und
Fig. 7    den waagerechten Teilschnitt VII-VII in Fig. 6.

Die erfindungsgemäßen Apparaturen haben in allen dargestellten Ausführungsformen die Aufgabe, granulatförmiges Gut 10 entweder aus pulverförmigen und/oder flüssigen Substanzen, ggf. ausgehend von Starterkernen, herzustellen, oder solches Gut weiterzubehandeln, beispielsweise zu lackieren. Zu diesem Zweck ist ein Behälter 12 vorgesehen, der in bezug auf eine zumindest annähernd senkrechte Behälterachse A zumindest annähernd rotationssymmetrisch ist.

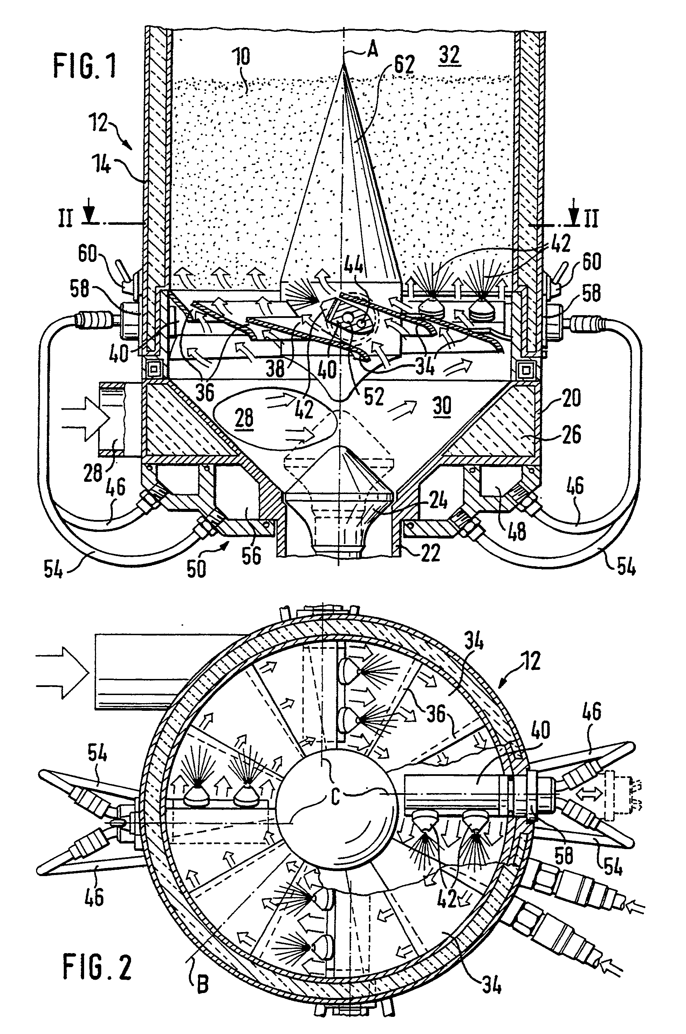

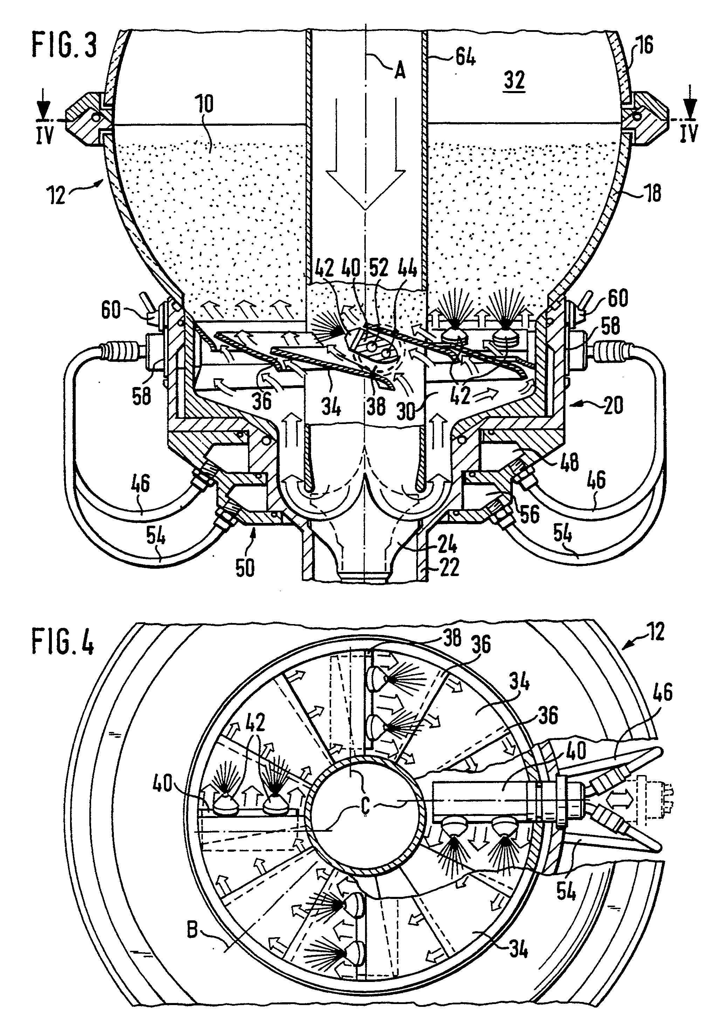

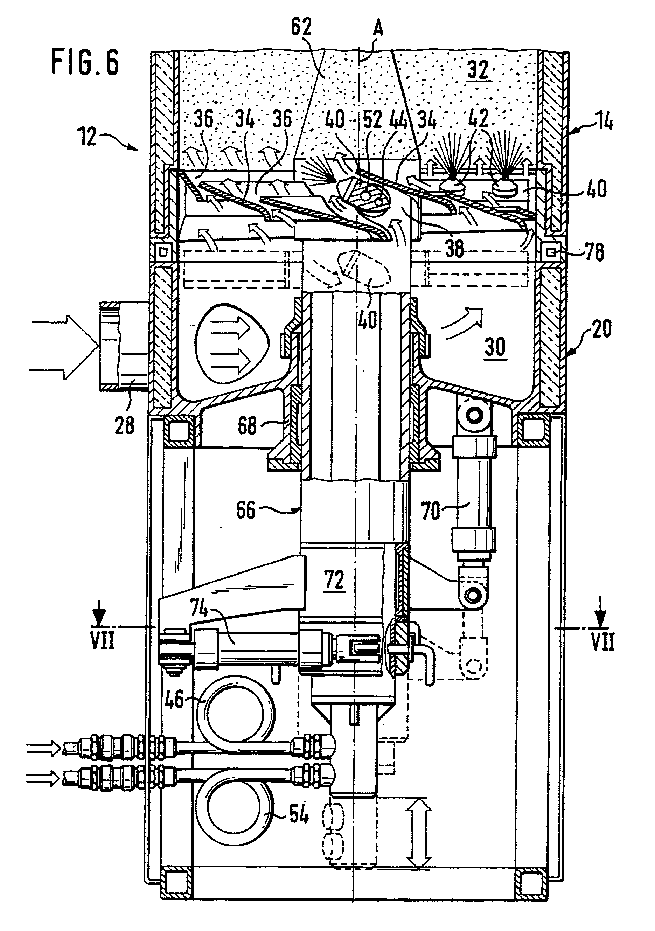

Der Behälter 12 hat gemäß Fig. 1 und 6 ein zylindrisches Hauptteil 14, gemäß Fig. 3 bis 5 hingegen ein im wesentlichen kugelförmiges Hauptteil, das sich aus einem oberen Kugelsegment 16 und einem unteren Kugelsegment 18 zusammensetzt. Zum Behälter 12 gehört jeweils ein ringförmiger Behältersockel 20 ; dieser mündet bei den Ausführungsformen gemäß Fig. 1 bis 5 in ein zentrales senkrechts Rohr 22, das mit einem senkrecht verstellbaren Stopfen 24 ganz oder teilweise verschließbar und u.a. zum Entleeren des Behälters 12 verwendbar ist. Bei den Ausführungsformen gemäß Fig. 1 und 2 sowie Fig. 6 und 7 sind Hauptteil 14 und Sockel 20 des Behälters 12 doppelwandig ausgeführt und mit einer Wärmeisolation 26 versehen.

Bei allen dargestellten Ausführungsformen hat der Behältersockel 20 einen Einlaß 28, durch den relativ trockene, erwärmte Prozeßluft tangential in eine Eintrittskammer 30 einleitbar ist. Alternativ kann die erforderliche Prozeßluft bei den Ausführungsformen gemäß Fig. 1 und 2 sowie Fig. 3 bis 5 durch das zentrale Rohr 22 bei leicht angehobenem Stopfen 24 in die Eintrittskammer 30 eingeleitet werden.

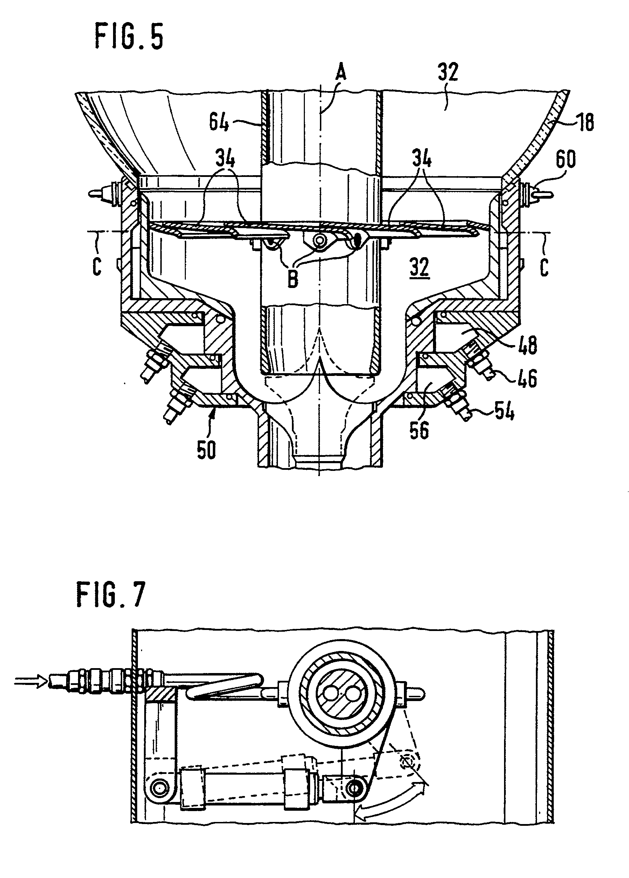

Die Eintrittskammer 30 ist gegen eine oberhalb von ihr im Behälter 12 angeordnete Wirbelkammer 32 durch einen propellerartigen, jedoch nicht rotierenden Kranz Leitplatten 34 abgegrenzt. In jedem der dargestellten Beispiele sind zwölf Leitplatten 34 vorgesehen, die gemäß Fig. 5 um je eine in bezug auf die Behälterachse A radiale Schwenkachse B schwenkeinstellbar sind. In ihrer Betriebsstellung sind die Leitplatten 34 gemäß Fig. 1 und 3 gegen die Behälterachse A um 45 bis 75° geneigt ; dabei überlappen benachbarte Leitplatten einander, wie auch aus Fig. 2 und 4 ersichtlich ist. Selbst wenn die Leitplatten 34 gegen die Behälterachse A um einen geringeren Winkel von beispielsweise 65° geneigt sind, bleibt noch eine Überlappung zwischen benachbarten Leitplatten bestehen.

Sämtliche Leitplatten 34 sind je um ihre Schwenkachse B in eine Ruhestellung schwenkbar, in der sie gemäß Fig. 5 gegen die Behälterachse A um nahezu 90° geneigt sind und im wesentlichen abdichtend aufeinanderliegen. In der Ruhestellung ist es möglich, in die Wirbelkammer 32 beispielsweise eine Charge Starterkerne zum Herstellen des Gutes 10 einzubringen, ohne daß eine nennenswerte Menge davon in die Eintrittskammer 30 fallen kann.

In Betriebsstellung lassen die Leitplatten 34 zwischen sich Durchlässe 36 und 38 unterschiedlicher Breite frei. Wenn man in einer der Draufsichten gemäß Fig. 2 oder 4 diejenige Leitplatte 34 als erste Leitplatte definiert, die etwa in der Zwölfuhrstellung eines Uhrzeigers beginnt und sich etwas über die Einuhrstellung hinauserstreckt, dann ist zwischen der ersten und zweiten Leitplatte sowie zwischen der zweiten und dritten Leitplatte je ein schmaler Durchlaß 36 vorgesehen, während zwischen der dritten und vierten Leitplatte ein breiter Durchlaß 38 vorgesehen ist. Diese Reihenfolge wiederholt sich in allen vier Quadranten, so daß bei der dargestellten Anzahl von zwölf Leitplatten 34 acht schmale Durchlässe 36 und vier breite Durchlässe 38 vorhanden sind.

In den breiten Durchlässen 38 ist je eine Lanze 40 angeordnet, die eine in bezug auf die Behälterachse A radiale Längsachse C hat und um diese Längsachse dreheinstellbar ist. Jede der in den dargestellten Beispielen insgesamt vier Lanzen 40 hat ein strömungsgünstiges Profil, das einem Horizontalschnitt durch einen Schiffsrumpf ungefähr entspricht und den zugehörigen Durchlaß 38 erheblich verengt, und zwar auf der Oberseite der betreffenden Lanze 40 stärker als auf deren Unterseite. Die Prozeßluft durchströmt jeden der breiten Durchlässe 38 also vorwiegend unterhalb und nur zu einem kleineren Teil oberhalb der dort angeordneten Lanze 40.

Bei den Ausführungsbeispielen gemäß Fig. 1 bis 5 sind die Lanzen 40 radial von außen nach innen durch je eine Bohrung im Hauptteil 14 bzw. Behältersockel 20 eingeschoben. Jede der Lanzen 40 weist mehrere — in den dargestellten Ausführungsbeispielen zwei — Düsen 42 auf, die mindestens annähernd in Strömungsrichtung der zwischen den benachbarten Leitplatten 34 hindurchströmenden Prozeßluft schräg nach oben gerichtet sind. Je nach Schwenkstellung der Leitplatten 34 ist jede der Lanzen 40 im Betrieb durch die über ihr angeordnete Leitplatte 34 so abgedeckt, daß sie von oben her höchstens teilweise sichtbar ist. Die Düsen 42 liegen hingegen frei, so daß sie die über ihnen liegende Leitplatte 34 selbst dann nicht besprühen können, wenn die Strömung der Prozeßluft schwächer als vorgesehen eingestellt ist.

Die Düsen 42 sind in den dargestellten Beispielen Zweistoffdüsen zum Versprühen einer Flüssigkeit, die mit Sprühluft vernebelt wird. Dementsprechend enthalten die Lanzen 40 je einen zu ihrer Längsachse C parallelen Flüssigkeitskanal 44, der über einen Schlauch 46, und gemäß Fig. 1 bis 5 über einen Ringkanal 48, mit einer Flüssigkeitsquelle verbunden ist. Der Ringkanal 48 ist in einem Basisring 50 ausgebildet, der von unten her auf den Behältersockel 20 aufgeschoben ist und gegen diesen abdichtet. Ferner ist in jeder Lanze 40, ebenfalls parallel zu ihrer Längsachse C, ein Sprühluftkanal 52 vorgesehen, der über einen Schlauch 54, und gemäß Fig. 1 bis 5 über einen zweiten Ringkanal 56 im Basisring 50, mit einer Druckluftquelle verbunden ist.

Gemäß Fig. 1 bis 5 hat jede der Lanzen 40 einen kreisförmigen Flansch 58, der mit einer außen am Behälter 12 bzw. Behältersockel 20 angeordneten Klemmvorrichtung 60 in einer gewählten Drehwinkelstellung der zugehörigen Lanze 40 festgeklemmt ist. Am Flansch 58 kann eine Skala vorgesehen sein, die es erleichtert, einen bestimmten, als günstig erprobten Drehwinkel der zugehörigen Lanze 40 einzustellen. Die Klemmvorrichtungen 60 lassen sich wegschwenken, damit die Lanzen 40 aus dem Behälter 12 radial nach außen herausgezogen werden können. Der von den Lanzen 40 freigegebene Raum wird dann von den benachbarten Leitplatten 34 eingenommen, wenn diese in ihre Ruhestellung gemäß Fig. 5 geschwenkt werden.

Bei der Ausführungsform gemäß Fig. 1 und 2 sowie Fig. 6 und 7 ist innerhalb der Wirbelkammer 32 ein Verdrängungskörper in Gestalt eines Kegels 62 mit nach oben weisender Spitze gleichachsig mit dem Behälter 12 angeordnet.

Bei der Ausführungsform gemäß Fig. 3 bis 5 ist ebenfalls ein Verdrängungskörper vorgesehen ; dieser ist jedoch ein Tauchrohr 64, das von oben her gleichachsig in den Behälter 12 eingeführt ist und sich bis in die Nähe des Stopfens 24 erstreckt. Die Prozeßluft wird bei dieser Ausführungsform durch das Tauchrohr 64 eingeleitet und von dem entsprechend gestalteten Stopfen 24 nach oben in die Eintrittskammer 30 umgelenkt.

Bei der Ausführungsform gemäß Fig. 6 und 7 sind die Leitplatten 34 und Lanzen 40 an einem zentralen Behältereinsatz 66 befestigt. Dieser Behältereinsatz 66 ist ein Rohr, das sich senkrecht nach unten erstreckt und in einer Führungsbüches 68 im Behältersockel 20 geführt ist und sich auf- und abwärts verstellen läßt. Zum Verstellen ist eine achsparallele Kolbenzylindereinheit 70 vorgesehen, die am Behältersockel 20 aufgehängt ist und einen Stützring 72 trägt, an dem der Behältereinsatz 66 abgestützt ist. Der Behältereinsatz 66 ist mit dem Stützring 72 ferner durch eine tangentiale Kolbenzylindereinheit 74 derart verbunden, daß er sich auch drehen läßt. Durch gleichzeitiges Betätigen der beiden Kolbenzylindereinheiten 70 und 74 läßt sich der Behältereinsatz 66 schraubend bewegen, so daß er wahlweise die in Fig. 6 mit vollen Linien gezeichnete Betriebsstellung oder die gestrichelte Ruhestellung einnimmt. In der Ruhestellung läßt sich der Hauptteil 14 des Behälters 10 abnehmen, ohne daß die Gefahr einer Beschädigung der Leitplatten 34 und Düsen 42 besteht. In der Betriebsstellung ist der Hauptteil 14 gegen den Sockel 20 des Behälters 10 durch eine aufblähbare Dichtung 78 abgedichtet.

Eine nicht dargestellte Variante besteht darin, daß Merkmale von Fig. 3 und 6 miteinander kombiniert sind, indem der zentrale Behältereinsatz 66 ein Tauchrohr 64 aufweist, durch das erwärmte Luft oder anderes Gas von oben her in die Eintrittskammer 30 einleitbar ist.

## Patentansprüche

1. Fließbettapparatur zum Herstellen und/oder Weiterbehandeln granulatförmigen Gutes (10) mit
— einem Behälter (12), der in bezug auf eine zumindest annähernd senkrechte Behälterachse (A) zumindest annähernd rotationssymmetrisch ist, und dessen Innenraum sich zusammensetzt aus
— einer Eintrittskammer (30), die von einem Gas, insbes. trockener Luft, von unten nach oben durchströmbar ist, und
— einer Wirbelkammer (32), die über der Eintrittskammer (30) angeordnet und zum Fluidisieren des Gutes (10) ausgebildet ist, und mit
— einem Kranz Leitplatten (34) die dem aufwärtsgerichteten Gasstrom zwischen Eintrittskammer (30) und Wirbelkammer (32) einen Drall erteilen, sowie
— Düsen (42) zum Einbringen von Granulierstoffen in die Wirbelkammer (32), dadurch **gekennzeichnet,** daß
— die Leitplatten (34), in Richtung der Behälterachse (A) betrachtet, einander überlappen, und
— zwischen den Leitplatten (34) mindestens annähernd radial zur Behälterachse (A) Lanzen (40) angeordnet sind, die mindestens je eine in Strömungsrichtung des Gases angeordnete Düse (42) aufweisen.

2. Fließbettapparatur nach Anspruch 1, dadurch **gekennzeichnet,** daß jede Lanze (40) von oben in Richtung der Behälterachse (A) betrachtet, durch die über ihr angeordnete Leitplatte (34) mindestens teilweise verdeckt ist.

3. Fließbettapparatur nach Anspruch 1 oder 2, dadurch **gekennzeichnet,** daß die Leitplatten (34) um ein je eine radiale Schwenkachse (B) aus einer Betriebsstellung in eine Ruhestellung schwenkbar sind, in der sie die Wirbelkammer (32) von der Eintrittskammer (30) trennen.

4. Fließbettapparatur nach Anspruch 3, dadurch **gekennzeichnet,** daß die Leitplatten (34) in ihrer Betriebsstellung um 45° bis 75° gegen die Behälterachse (A) geneigt sind.

5. Fließbettapparatur nach einem der Ansprüche 1 bis 4, dadurch **gekennzeichnet,** daß die Lanzen (40) um je eine eigene Längsachse (C) dreheinstellbar sind.

6. Fließbettapparatur nach einem der Ansprüche 1 bis 5, dadurch **gekennzeichnet,** daß die Lanzen (40) an einem gemeinsamen, topfförmigen Behältersockel (20) befestigt sind.

7. Fließbettapparatur nach Anspruch 6, dadurch **gekennzeichnet,** daß die Lanzen (40) sich mindestens annähernd bis zu einem Tauchrohr (64) erstrecken, das im Behälter (12), mit diesem gleichachsig, angeordnet und zum Einleiten von Gas in die Eintrittskammer (30) vorgesehen ist.

8. Fließbettapparatur nach einem der Ansprüche 1 bis 5, dadurch **gekennzeichnet,** daß die Lanzen (40) und Leitplatten (34) an einem zentralen Behältereinsatz (66) befestigt sind.

9. Fließbettapparatur nach Anspruch 8, dadurch **gekennzeichnet,** daß der zentrale Behältereinsatz (66) ein Tauchrohr (64) zum Einleiten von Gas in die Eintrittskammer (30) aufweist.

10. Fließbettapparatur nach einem der Ansprüche 1 bis 9, dadurch **gekennzeichnet,** daß die Düsen (42) Mehrstoffdüsen sind.

## Claims

1. Fluidized bed apparatus for the production and/or further treatment of granulate material (10) comprising
   — a container (12) which is at least approximately rotational symmetrical with respect to an at least approximately vertical container axis (A) and the interior of which is made up of
   — an inlet chamber (30) adapted to be traversed from the bottom to the top by a gas, in particular dry air, and
   — a vortex chamber (32) which is arranged above the inlet chamber (30) and formed for fluidizing the material (10) and
   — a ring of guide plates (34) which impart a twist to the upwardly directed gas flow between inlet chamber (30) and vortex chamber (32) and
   — nozzles (42) for introducing granulation materials into the vortex chamber (32), characterized in that
   — the guide plates (34) overlap each other, seen in the direction of the container axis (A), and
   — between the guide plates (34) lances (40) are arranged at least approximately radially to the container axis (A) and each have at least one nozzle (42) arranged in the flow direction of the gas.

2. Fluidized bed apparatus according to claim 1, characterized in that each lance (40) considered from above in the direction of the container axis (A) is at least partially covered by the guide plate (34) arranged thereabove.

3. Fluidized bed apparatus according to claim 1 or 2, characterized in that the guide plates (34) are each pivotal about a radial pivot axis (B) out of an operating position into a rest position in which they separate the vortex chamber (32) from the inlet chamber (30).

4. Fluidized bed apparatus according to claim 3, characterized in that the guide plates (34) are inclined in their operating position 45° to 75° to the container axis (A).

5. Fluidized bed apparatus according to any one of claims 1 to 4, characterized in that the lances (40) are rotatably adjustable about their own respective longitudinal axis (C).

6. Fluidized bed apparatus according to any one of claims 1 to 5, characterized in that the lances (40) are mounted on a common pot-shaped container base (20).

7. Fluidized bed apparatus according to claim 6, characterized in that the lances (40) extend at least approximately up to an immersion tube (64) which is arranged in the container (12), coaxial with the latter and provided for introduction of gas into the inlet chamber (30).

8. Fluidized bed apparatus according to any one of claims 1 to 5, characterized in that the lances (40) and guide plates (34) are mounted on a central container insert (66).

9. Fluidized bed apparatus according to claim 8, characterized in that the central container insert (66) comprises an immersion tube (64) for introducing gas into the inlet chamber (30).

10. Fluidized bed apparatus according to any one of claims 1 to 9, characterized in that the nozzles (42) are multiple substance nozzles.

## Revendications

1. Appareil à lit fluidisé pour la production et/ou le traitement de produit granulaire (10), comportant
   — un récipient (12), qui est au moins approximativement à symétrie de révolution par rapport à un axe de récipient (A) au moins approximativement vertical, et dont l'espace intérieur se compose
   — d'une chambre d'admission (30), qui peut être traversée de bas en haut par un gaz, notamment de l'air sec, et
   — d'une chambre de tourbillonnement (32), disposée au-dessus de la chambre d'admission (30) et conçue pour fluidiser le produit (10), et comportant
   — une couronne de plaques de guidage (34), qui impriment une giration au flux de gaz dirigé vers le haut entre la chambre d'admission (30) et la chambre de tourbillonnement (32), ainsi que
   — des buses (42) pour introduire des substances de granulation dans la chambre de tourbillonnement (32), **caractérisé** en ce que
   — les plaques de guidage (34), en vue en direction de l'axe du récipient (A), se chevauchent, et
   — des lances (40) sont disposées au moins approximativement radialement à l'axe de récipient (A) entre les plaques de guidage (34), et elles présentent chacune au moins une buse (42) disposée dans le sens d'écoulement du gaz.

2. Appareil à lit fluidisé selon la revendication 1, caractérisé en ce que chaque lance (40), en vue de dessus en direction de l'axe de récipient (A), est recouverte au moins partiellement par la plaque de guidage (34) qui est disposée au-dessus d'elle.

3. Appareil à lit fluidisé selon la revendication 1 ou 2, caractérisé en ce que les plaques de guidage (34) peuvent pivoter, autour d'un axe de pivotement radial respectif (B), d'une position de service à une position de repos, dans laquelle elles séparent la chambre de tourbillonnement (32) de la chambre d'admission (30).

4. Appareil à lit fluidisé selon la revendication 3, caractérisé en ce que les plaques de guidage (34), dans leur position de service, sont inclinées de 45° à 75° par rapport à l'axe de récipient (A).

5. Appareil à lit fluidisé selon l'une des revendications 1 à 4, caractérisé en ce que les lances (40) peuvent être réglées en rotation autour d'un propre axe longitudinal respectif (C).

6. Appareil à lit fluidisé selon l'une des revendications 1 à 5, caractérisé en ce que les lances (40) sont fixées sur un socle de récipient commun (20), en forme de pot.

7. Appareil à lit fluidisé selon la revendication 6, caractérisé en ce que les lances (40) s'étendent au moins approximativement jusqu'à un tube plongeur (64), qui est disposé dans le récipient (12), coaxialement à ce dernier, et qui est prévu pour introduire du gaz dans la chambre d'admission (30).

8. Appareil à lit fluidisé selon l'une des revendications 1 à 5, caractérisé en ce que les lances (40) et les plaques de guidage (34) sont fixées sur une pièce insérée centrale (66) du récipient.

9. Appareil à lit fluidisé selon la revendication 8, caractérisé en ce que la pièce insérée centrale (66) du récipient présente un tube plongeur (64) pour introduire du gaz dans la chambre d'admission (30).

10. Appareil à lit fluidisé selon l'une des revendications 1 à 9, caractérisé en en ce que les buses (42) sont des buses pour plusieurs substances.

**FIG.1**

**FIG.2**

FIG.3

FIG.4

# FIG.5

# FIG.7

# FIG.6